# EUROPEAN PATENT SPECIFICATION

(11) **EP 2 914 684 B1**
(45) Date of publication and mention of the grant of the patent: **30.08.2017**
(21) Application number: 14745651.1
(22) Date of filing: 22.01.2014
(51) Int. Cl.: C09K 8/50, C04B 28/02, E21B 33/14, C04B 40/00, C09K 8/467, C09K 8/44

(54) **METHOD FOR PLACING A SEALANT IN A SUBTERANNEAN FORMATION**
VERFAHREN ZUM ANBRINGEN EINES DICHTUNGSMATERIALS IN EINER UNTERIRDISCHEN FORMATION
PROCEDE DE MISE EN PLACE D'UN AGENT D'ÉTANCHÉITÉ DANS UNE FORMATION SOUTERRAINE

(30) Priority: 29.01.2013 US 201313752421
(43) Date of publication of application: 09.09.2015
(73) Proprietor: Halliburton Energy Services, Inc., Houston, TX 77072 (US)
(72) Inventor: BALDASARO, Nicholas, Chapel Hill, NC 27514 (US); GUPTA, Vijay, Morrisville, NC 27560 (US); LEWIS, Samuel, Houston, TX 77032 (US)
(74) Representative: Hoffmann Eitle
(86) International application number: PCT/US2014/012538
(87) International publication number: WO 2014/120528

(56) References cited:
- EP-A1- 0 393 407
- WO-A1-2011/023935
- US-A- 4 768 593
- US-A1- 2008 196 829
- US-A1- 2011 079 389
- US-A1- 2011 265 996
- US-A1- 2011 272 142
- US-A1- 2012 298 354

## Description

The present invention generally relates to hydrocarbon exploration and production operations, such as subterranean cementing operations, and more particularly to compositions and methods that allow for greater control over the setting of fluids or slurries used during such operations.

Natural resources such as oil and gas located in a subterranean formation can be recovered by drilling a wellbore down to the subterranean formation, typically while circulating a drilling fluid in the wellbore. After the wellbore is drilled, a string of pipe, e.g., casing, can be run in the wellbore. The drilling fluid is then usually circulated downwardly through the interior of the pipe and upwardly through the annulus between the exterior of the pipe and the walls of the wellbore, although other methodologies are known in the art.

Hydraulic cement compositions are commonly employed in the drilling, completion and repair of oil and gas wells. For example, hydraulic cement compositions are utilized in primary cementing operations whereby strings of pipe such as casing or liners are cemented into wellbores. In performing primary cementing, a hydraulic cement composition is pumped into the annular space between the walls of a wellbore and the exterior surfaces of a pipe string disposed therein to harden. After the cement is placed within the wellbore, a period of time is needed for the cement to cure and obtain enough mechanical strength for drilling operations to resume. This down time is often referred to as "wait-on-cement", or WOC. The WOC time ranges from a few hours to several days, depending on the difficulty and criticality of the cement job in question. It is desirable to reduce the WOC time, so that the crew can recommence the drilling operation, and thus reduce the total time and cost of operations. If operations are resumed prior to the cement obtaining sufficient mechanical strength, the structural integrity of the cement can be compromised. As such, systems generally are over-engineered to have very long setting (or thickening) times in order to ensure that the mix remains fluid until all of the cementitious material is in place, which can result in excessive WOC. WO 2001/023935 A1, US 2011/265996 and US 2011/272142 disclose methods for placing a sealant composition comprising a polymerizable additive into a wellbore and subjecting it to ionizing radiation. US 4,768,593 discloses a method for cementing a well by placing a drilling mud composition comprising a polymerizable compound into a wellbore and exposing it to a radiation source.

### BRIEF DESCRIPTION OF THE DRAWINGS

The following figures are included to illustrate certain aspects of the present invention, and should not be viewed as exclusive embodiments. The subject matter disclosed is capable of considerable modifications, alterations, combinations, and equivalents in form and function, as will occur to those skilled in the art and having the benefit of this disclosure.
FIG. 1 illustrates a cross sectional side view of a wellbore.
FIG. 2 illustrates a cross sectional side view of an electron beam energy source used in a wellbore for subjecting the sealant composition to a radiation dose according one embodiment of the present disclosure.

### DETAILED DESCRIPTION

The present invention generally relates to hydrocarbon exploration and production operations, such as subterranean cementing operations, and more particularly to compositions and methods that allow for greater control over the setting of fluids or slurries used during such operations by curing cement compositions with radiation.

The use of bremsstrahlung radiation in doses in the sub-1000 gray range generated by electron accelerators, has significant advantages. At 10-50%, the efficiency (E of photons out over electrical E in) of electron-to-bremsstrahlung photon production is much higher than that of most other ionizing particles, such as neutrons and protons. For many competing methods of high energy photon production, the efficiency of photon production is 2-4 orders of magnitude greater. As a result, the problems associated with excess heat production and large energy requirements are minimized.

Further, the use of electron accelerators to generate bremsstrahlung radiation does not require a supply of precursor fuel, such as deuterium or tritium due to the abundance of electrons in matter.

The present invention relates generally to wellbore operations involving fluids or slurries, and more particularly, to fluids or slurries that contain accelerating agents and/or retarders that can be released, activated and/or deactivated on command to provide thickening to the fluid or slurry. The fluids or slurries referred to herein can be any suitable for wellbore operations, drilling, completion, workover or production operations. The fluids may include various types of sealants, such as resins, cements, settable muds, lost circulation fluids, conformance fluids, and combinations thereof. One embodiment of the present invention relates to wellbore cementing operations, and more particularly, to methods of sealing in wellbores using cementitious compositions that contain polymerizable additives that can be subjected to radiation doses of from 1 gray to 1000 grays to form a seal.

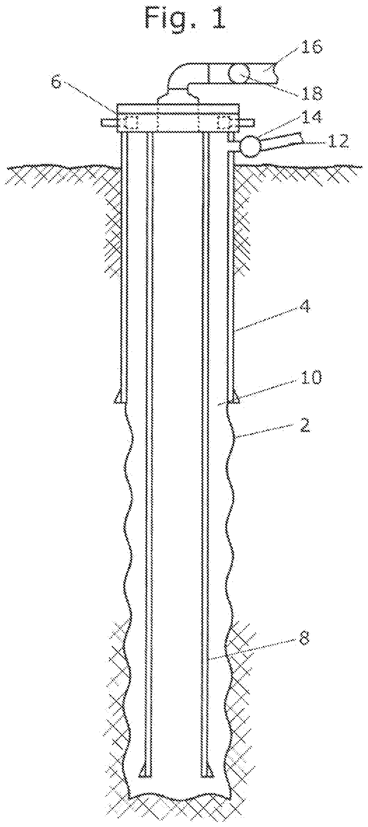

Referring to FIG. 1, a cross sectional side view of an embodiment of a wellbore 2 is illustrated. Surface casing 4, having a wellhead 6 attached, is installed in the wellbore 2. Casing 8 is suspended from the wellhead 6 to the bottom of the wellbore 2. An annulus 10 is defined between casing 8 and the wellbore 2. Annulus flow line 12 fluidly communicates with annulus 10 through the wellhead 6 and/or surface casing 4 with an annulus valve 14. Flow line 16 is connected to the wellhead 6 to allow fluid communication with the inner diameter of casing 8 and a casing valve 18. At the lower most end of casing 8 the casing is open to the wellbore 2 or has circulation ports in the walls of casing 8 (not shown) to allow fluid communication between the annulus 10 and the inner diameter of casing 8.

A cement composition can be pumped down the casing 8 and circulated up the annulus 10 while fluid returns are taken from the annulus 10 out annulus flow line 12, in a typical circulation direction. Alternately, the cement composition can be pumped into the annulus 10 from annulus flow line 12 while fluid returns are taken from the inner diameter of casing 8 through flow line 16. Thus, fluid flows through wellbore 2 in a reverse circulation direction.

In an alternate method a fluid composition, such as a cement slurry, can be placed within the wellbore 2 and a sealed or filled tubular, such as casing 8, can be lowered into the wellbore 2 such that the fluid composition is displaced into the annulus 10 area, thereby placing the fluid composition within the annulus 10 without pumping the fluid composition into the annulus 10. The above method can be referred to as puddle cementing. The fluid composition can be a drilling fluid placed within the wellbore after drilling operations are complete.

The sealant is subjected to a dose of radiation from bremsstrahlung photons which result from decelerating electrons. Bremsstrahlung radiation, or simply bremsstrahlung, is electromagnetic radiation produced by a sadden slowing down or defection of charged particles (specifically electrons in this embodiment) passing through matter in the vicinity of the strong electric fields of atomic nuclei. Bremsstrahlung produces a continuous X-ray spectra-*i.e*., the resulting photons cover a whole range of energy, from a maximum value downward through lower values all the way to zero. In generating bremsstrahlung, some electrons that collide with a material target are decelerated to zero kinetic energy by a single head-on collision with a nucleus, and thereby have all their energy of motion converted at once into photon radiation of maximum energy. Other electrons from the same incident beam come to rest after being decelerated many times by the positively charged nuclei. Each deflection and subsequent scattering of the electrons gives rise to a pulse of electromagnetic energy, or photon, of less than maximum energy. The maximum energy of any one bremsstrahlung photon is the original kinetic energy of the incoming charged particle, typically an electron in this embodiment.

To generate bremsstrahlung, an electron accelerator may be used. Electron beam bremsstrahlung-induced curing is a fast non-thermal process which utilizes highly energetic electrons at controlled doses to produce scattered photons that polymerize and crosslink polymeric materials. To produce electrons with resulting bremsstrahlung photons that are most effective at crosslinking, the electron accelerator in this embodiment should generate electrons having an energy of about 0.5 MeV to about 20 MeV. In other embodiments, the electrons have an energy of about 0.1 MeV to about 50 MeV. The maximum intensity of the electron accelerators which produce bremsstrahlung photons may be large, over 10¹⁴/s. Further, the electron accelerators may be geometrically modified to be accessible downwell. For example, in some embodiments, a 5-6 MeV energy electron accelerator with an average current of 10s of microamps (>10¹⁴/s) and a tungsten target can induce bulk gelation in some slurries in a few seconds.

Various electron accelerators are suitable for use in the present invention. For example, on electron accelerator which includes a Cockcroft-Walton voltage multiplying system that can make use of extra linear space within a casing to amplify voltage up to the necessary several MeV level. This system, which has a long, narrow shape makes it amenable to downhole utility. Another suitable example of an electron accelerator is an RF cyclotron. Another example of an electron accelerator technology for use in the present invention is that of Wakefield technology. Wakefield technology exploits laser pulses to evacuate electrons from small volumes of crystals. This allows other particles to accelerate as the system returns to equilibrium.

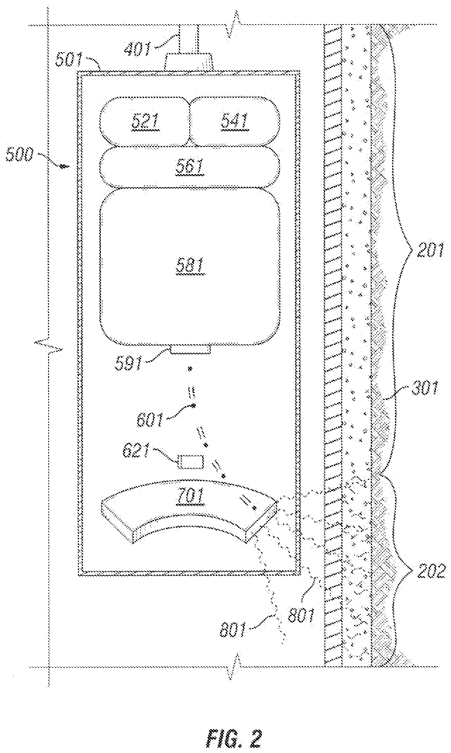

One embodiment of the present invention is shown in Fig. 2. Fig. 2 shows a cross sectional side view of an exemplary electron beam energy source used in a wellbore for subjecting the sealant composition to a radiation dose.

A tool wireline 401 supplies electrical power and communications from the accelerator 500 to the surface of the wellbore. The tool wireline 401 also bears the mass of the accelerator 500 during transit up and down the borehole.

The electron accelerator 500 comprises a housing 501 that houses all the accelerator components. The housing 501 may have any geometrical structure suitable for housing the components and for going downwell in any type of geological formation 301.

The electron accelerator may include accelerator electrical power components 561. These components may include devices for properly allocating electrical power from the tool wireline 401 to the various power-using devices throughout the accelerator 500.

An accelerator RF electron acceleration component 581 may also be included in the electron accelerator 500. The accelerator type may be Cockcroft-Walton, radiofrequency, or Wakefield. The accelerator may also include lasers. In addition, the accelerator 500 may have a characteristic radius. The acceleration mechanism may involve plasma, RF induced electromagnetic fields, capacitors and diodes or other mechanisms suitable for downwell operations.

The accelerator 500 may also include cooling components 521. The cooling component 521 could include cryogenic liquid with insulation. The accelerator may also include communication components 541. These components may include devices used to assist with communicating signals to and from the tool wireline 401 to run the accelerator 500 properly.

Attached to the acceleration component 581 is an electron beam port 591. This location is where the accelerated electrons 601 are expelled from the acceleration electronics and put on a trajectory to impinge upon the high Z target 701. The accelerated electrons in the present disclosure may have a kinetic energy of from about 0.5 MeV and about 20 MeV. In other embodiments, the accelerated electrons have a kinetic energy of from about 0.1 MeV to about 50 MeV. The electrons may be accelerated in a direction parallel to the axis of the accelerator geometry.

An electron beam rastoring device 621 may be included to shape the trajectory of the electrons 601 to depart from straight lines, to impinge on the high Z target 701. The rastoring device 621 could include an electromagnet. In other embodiments, the electron accelerator 500 may forego the use of the rastoring device 621 and instead align the high Z target 701 with the electron beam port, or increase the size of the area of the high Z target 701. In order to optimize device utility, it is desirable to create a trajectory for the accelerated electrons whereby they impinge upon the high Z target 701 at angles that are as perpendicular to the casing 101 as feasible so as to minimize the path length of the bremsstrahlung photons 801 though the casing 101 and the material surrounding the accelerator such as mud, pressurized water and other materials. As such, the plane of the surface of the high Z target 701 might be angled with respect to the radial plane of the accelerator and borehole.

During use of the accelerator 500 in the borehole, the accelerator 500 may pass downward though the borehole in order to set the cement slurry. In the example shown in Fig. 2, the accelerator 500 has set the cement 201 in the upper portion of the borehole, whereas the cement below the accelerator 500 has not yet been irradiated, and as such, is yet to be cured cement slurry 202. However, instead of passing downward, in other embodiments, the accelerator 500 could be lowered to the bottom of the borehole and then pulled upwards with the tool wireline 401 to set the cement slurry from the bottom upward.

Any cement suitable for use in subterranean applications may be suitable for use in the present invention. The cementitious compositions disclosed herein generally include water and a cement component such as hydraulic cement, which can include calcium, aluminum, silicon, oxygen, and/or sulfur that sets and hardens by reaction with the water. Examples of hydraulic cements include but are not limited to Portland cements (e.g., Classes A, C, G, and H Portland cements), pozzolana cements, gypsum cements, phosphate cements, high alumina content cements, silica cements, high alkalinity cements, and combinations thereof. Cements including shale, cement kiln dust or blast furnace slag also may be suitable for use in the present invention. In certain embodiments, the shale may include vitrified shale. In certain other embodiments, the shale may include raw shale (e.g., unfired shale), or a mixture of raw shale and vitrified shale.

The sealant includes a polymerizable additive capable of undergoing polymerization when subjected to radiation. The polymerizable additive may be present in an amount of 0.01% to 25% by weight of the cement composition. In other embodiments, the polymerizable additive is in an amount of 1 to 15%.

The polymerizable additive may include one selected from alkeneoxides, vinyl pyrrolidones, vinyl alcohols, acrylamides, vinyl methyl ethers, isobutylenes, fluoroelastomers, esters, tetrafluoroethylenes, acetals, propylenes, ethylenes, methylpentenes, methylmethacrylates, fluorinated ethylene propylenes, derivatives thereof and combinations thereof.

The sealant may also include a crosslinking agent capable of crosslinking a polymer formed by the polymerization of the polymerizable additive. For example, the crosslinking agent may include at least one selected from the group consisting of a poly(ethylene glycol) diacrylates, a poly(ethylene glycol) dimethacrylates, trimethylolpropane triacrylates (TMPTA), ethoxylated TMPTAs, trimethylolpropane trimethacrylates, trimethylolpropanetriacrylates, hexanediol diacrylates, N,N-methylene bisacrylamides, hexanedioldivinylethers, triethyleneglycol diacrylates, pentaeritritoltriacrylates, tripropyleneglycol diacrylates, 1,3,5-triallyl-1,3,5-triazine-2,4,6(1H,3H,5H)-triones, 2,4,6-triallyloxy-1,3,5-triazines, alkoxylated bisphenol A diacrylates, derivatives thereof, and combinations thereof.

The sealant or cement compositions used in the present invention can further include a set retarder. Set retarding admixtures lengthen the time at which the fluid or slurry composition remains a fluid. These retarding admixtures consequently allow a fluid or slurry, such as cement, to be pumped along long distances without the effect of premature setting. A broad variety of set retarders may be suitable for use in the fluid or slurry compositions used in the present invention. For example, the set retarder may include, inter alia, phosphonic acid, phosphonic acid derivatives, lignosulfonates, salts, sugars, carbohydrate compounds, organic acids, carboxymethylated hydroxyethylated celluloses, synthetic co- or ter-polymers including sulfonate and carboxylic acid groups, and/or borate compounds. In certain embodiments, the set retarders used in the present invention are phosphonic acid derivatives, such as those described in U.S. Pat. No. 4,676,832 Examples of suitable borate compounds include, but are not limited to, sodium tetraborate and potassium pentaborate. Examples of suitable organic acids include, inter alia, gluconic acid and tartaric acid. Generally, the set retarder is present in the fluid or slurry compositions used in the present invention in an amount sufficient to delay the setting of the fluid or slurry composition in a subterranean formation for a desired time. More particularly, the set retarder may be present in the fluid or slurry compositions used in the present invention in an amount of from about 0.1% to about 10% bwoc. In certain embodiments, the set retarder is present in the fluid or slurry compositions used in the present invention in an amount of from about 0.5% to about 4% bwoc.

The set retarders of the current invention may include a sensitizer-containing retarder, such as a boron-containing retarder. The sensitizer can be made from a material having a strong radiation absorption property. The sensitizer can also be a scintillator material. The sensitizer can be any material that increases the capture efficiency of the ionizing radiation within the slurry. This sensitizer-containing retarder, also referred to as a sensitized retarder, can be a boron-containing retarder, also referred to as a boronated retarder, may include a wide variety of set retarders, including the set retarders disclosed herein, wherein the selected set retarder, or combination or set retarders, additionally includes at least one boron atom. As discussed in the immediately preceding paragraph, sugars and/or carbohydrates can be used as a retarder in the setting of a cement composition. In an embodiment, the retarder is a sensitized sugar or carbohydrate. In a more specific embodiment, the sensitized retarder is boronated glucose. In an even more specific embodiment, the boronated glucose is represented by 3-O-(o-Carborany-1-ylmethyl)-D-glucose, as presented in U.S. Pat. No. 5,466,679, to Soloway et al.

The compositions of the present invention may also include a set accelerator. The accelerator aids in overcoming possible delays caused by the set retarders by shortening the setting time of the fluid or slurry composition. A broad variety of set accelerators may be suitable for use in the fluid or slurry compositions used in the present invention, the set accelerator may include any component that reduces the setting time of a cement composition. For example, the set accelerator may include alkali and alkali earth metal salts, silicate salts, aluminates and amines, such as triethanolamine. In an embodiment, the set accelerator is a calcium salt. The calcium salt may be selected from the group consisting of calcium formate, calcium nitrate, calcium nitrite and calcium chloride. In a specific embodiment, the set accelerator is calcium chloride. The set accelerator may be present in the fluid or slurry compositions used in the present invention in an amount of from 0.1% to 20% bwoc. In certain embodiments, the set accelerator is present in the cement compositions used in the present invention in an amount of from 4% to 12% bwoc.

Methods of this invention for isolating a wellbore or a portion of a wellbore may include placing a sealant composition including a polymerizable additive, pumping the sealant composition containing the polymerizable additive into a wellbore penetrating a subterranean formation, and subjecting the sealant composition to a radiation dose of from 1 gray to 1000 grays, so as to form a seal therein, wherein the radiation dose is from bremsstrahlung photons that result from electron scattering and wherein the bremsstrahlung photons initiate setting of the sealant composition. In other embodiments, the sealant composition may be subjected to a radiation dose of from 5 grays to 500 grays.

Methods of this invention may include preparing a cement composition comprising: hydraulic cement, a polymerizable additive, and sufficient water to form a slurry; placing the cement composition into the wellbore; and subjecting the cement composition to a radiation dose from bremsstrahlung photons that result form electron scattering of from 1 gray to 1000 grays to activate setting of the cement composition. In other embodiments, the cement composition may be subjected to a radiation dose of from 5 grays to 500 grays.

In an embodiment, a set retarder and/or a set accelerator or oxidizing agent are/is added to the cement mixture before water is added to the mixture. In another embodiment, the set retarder and/or the set accelerator or oxidizing agent are/is added to the cement mixture after water has been added to the mixture. In yet another embodiment, set retarder is added before the set accelerator or oxidizing agent. In yet another embodiment, the set accelerator is added before the set retarder. In a further embodiment, the set accelerator and/or set retarder is/are added during the mixing of the cement and water.

In an embodiment, once the cementitious composition containing the set retarder and/or set accelerator or oxidizing agent is obtained, the slurry is then placed in the wellbore, such as in a wellbore/casing annulus. Upon the placement of the slurry containing the set retarder and/or set accelerator or oxidizing agent in the wellbore, the cement particles and the set retarder and/or set accelerator or oxidizing agent should be substantially uniformly mixed with the cement particles in the cement slurry.

In a further embodiment, a set retarder as well as both a set accelerator and oxidizer are added to the fluid or slurry. Upon being exposed to the ionizing radiation, both the set accelerator and oxidizer are released. The simultaneous destruction of the retarder by the oxidizer and the acceleration of cement hydration by the set accelerator provide rapid set.

In an embodiment, the ionizing radiation is introduced by an ionizing radiation emitter located at a point within the wellbore. In another embodiment, an ionizing radiation emitter located at the surface introduces the ionizing radiation directed downward into the wellbore. In another embodiment, a radiation source is lowered into the wellbore, such as on a wireline, and the ionizing radiation is emitted. The radiation source can be shielded to not emit the ionizing radiation other than when the shielding is removed. For example, a radiation source can be shielded at the surface when personnel could otherwise be exposed. Once the ionizing radiation source is placed in the wellbore and radiation can safely be emitted, the shield can be removed or opened, such as by an electronically activated signal transmitted from the surface down the wireline to the shield. In an embodiment, the radiation emitter can emit ionizing radiation as it is lowered down the wellbore and as it is pulled up the length of the wellbore. In a further embodiment, two or more ionizing radiation emitters are separately lowered to two or more depths, such that two or more depths of the wellbore may be subject to the ionizing radiation simultaneously.

In an embodiment, the ionizing radiation is introduced under the control of a technician in the field. The technician, engineer, or other on-site employee, can have the control over the emission of the ionizing radiation by imputing a signal that causes a release of the ionizing radiation from an emitter. In this embodiment, the ionizing radiation is released on demand from the technician in the field. The ionizing radiation can be released by a control system having parameters such as timer, flow meter, temperature sensor, or the like. In another embodiment, the lowering and/or emitting of the ionizing radiation source is triggered by a timing mechanism. In a further embodiment, the lowering and/or emitting of the radiation source is triggered by a flow meter that detects the amount of the cement mixture delivered into the wellbore.

As mentioned above, the ionizing radiation of the current invention can be under the control of technicians in the field. The release of the ionizing radiation emissions act as a trigger in the sense that the radiation can destroy the sensitized retarder, thus allowing the setting of the cement slurry to proceed. The release of the ionizing radiation may also act as a trigger when the ionizing radiation emissions act to release the set accelerator or oxidizing agent, or both, into the cement slurry. Once the set accelerator or oxidizing agent is released, it is dispersed into the cement slurry and reacts with the slurry or retarder, resulting in the acceleration of the setting process. Therefore, technicians in the field can trigger the thickening of the cement slurry. This triggering process puts the thickening of the cement slurry under the control of technicians in the field and can result in a decrease in the time needed to wait on cement (WOC) in the drilling and completion of a wellbore.

The term "cementitious composition" as may be used herein includes pastes (or slurries), mortars, and grouts, such as oil well cementing grouts, shotcrete, and concrete compositions including a hydraulic cement binder. The terms "paste", "mortar" and "concrete" are terms of art: pastes are mixtures composed of a hydratable (or hydraulic) cement binder (usually, but not exclusively, Portland cement, Masonry cement, Mortar cement, and/or gypsum, and may also include limestone, hydrated lime, fly ash, granulated blast furnace slag, and silica fume or other materials commonly included in such cements) and water; "mortars" are pastes additionally including fine aggregate (e.g., sand), and "concretes" are mortars additionally including coarse aggregate (e.g., crushed rock or gravel). The cement compositions described in this invention are formed by mixing required amounts of certain materials, e.g., a hydraulic cement, water, and fine and/or coarse aggregate, as may be required for making a particular cementitious composition.

The term "set accelerator" can include any component, which reduces the setting time of a cement composition. For example, the set accelerator may include alkali and alkali earth metal salts, such as a calcium salt. The calcium salt may include calcium formate, calcium nitrate, calcium nitrite or calcium chloride.

The term "encapsulating layer" as used herein can mean any form of coating or binding wherein most of the material being encapsulated is enclosed within the layer and that the dissipation of the material is substantially restricted by the layer. It does not mean that all of the material being encapsulated is enclosed within the layer or that the material being encapsulated cannot leak through the encapsulating layer.

The term oxidizer can include any component which is capable of degrading the retarder present. These include, but are not limited to alkaline earth and zinc salts of peroxide, perphosphate, perborate, percarbonate; calcium peroxide, calcium perphosphate, calcium perborate, magnesium peroxide, magnesium perphosphate, zinc perphosphate; calcium hypochlorite, magnesium hypochlorite, chloramine T, trichloroisocyanuric acid, trichloromelamine, dichloroisocynaurate dihydrate, anhydrous dichloroisocynaurate; and mixtures thereof.

The term "radiation tolerance" as used herein is the amount of ionizing radiation that a material can withstand without noticeable or measurable degradation.

The term "retarder" or "set retarder" can include boronated or non-boronated forms of phosphonic acid, phosphonic acid derivatives, lignosulfonates, salts, sugars, carbohydrate compounds, organic acids, carboxymethylated hydroxyethylated celluloses, synthetic co- or ter-polymers including sulfonate and carboxylic acid groups, and/or borate compounds.

The term "set" as used herein refers to an increase in mechanical strength of a fluid or slurry sufficient to perform a desired result, such as to restrict movement of an item or impede fluid flow or pressure transfer through a fluid. A cement may be referred to as set when it can restrict the movement of a pipe, or impede fluid flow or pressure transfer, regardless of whether the cement has cured to a fully solid composition. A fluid or slurry can be referred to as set when it has thickened to a sufficient level that it achieves the desired result, such as the isolation of a particular zone or the restriction of fluid flow or pressure transfer, regardless of whether it has reached its final consistency.

The present invention may also be useful for cement or concrete in other applications, including infrastructure and building materials, where a quick setting time can be obtained with the polymer system. Some specific examples include rapid hardening of pre-cast units such as pipes, panels, and beams, cast in-situ structures for bridges, dams, or roads, quick-set grout, increased adhesion in cement, addition of water-resistant properties to cement, decorative concrete, rapid concrete repair, production of cement board. Other advantages over typical polymer-enhanced concrete systems include the ability to use a wider variety of polymer species, including oligomers which are significantly less volatile, combustible and toxic, and the elimination of initiators, which are also toxic to humans and the environment.

Embodiments disclosed herein include:
A method comprising: placing a sealant composition comprising a polymerizable additive into a wellbore penetrating a subterranean formation; and subjecting the sealant composition to a radiation dose of from 1 gray to 1000 grays, so as to form a seal therein, wherein the radiation dose is from bremsstrahlung photons that result from electron scattering and wherein the bremsstrahlung photons initiate setting of the sealant composition.

A method comprising: preparing a cement composition comprising: hydraulic cement, a polymerizable additive, and sufficient water to form a slurry; placing the cement composition into the wellbore; and subjecting the cement composition to a radiation dose of from 1 gray to 1000 grays to activate setting of the cement composition, wherein the radiation dose is from bremsstrahlung photons that result from electron scattering and wherein the bremsstrahlung photons initiate setting of the sealant composition.

Each of the above embodiments may have one or more of the following additional elements in any combination:

Element 1:
the method wherein the polymerizable additive comprises one selected from the group consisting of acrylate, methacrylate, polyalkylene oxide, alkeneoxide, vinyl pyrrolidone, polyvinyl pyrrolidone, acrylamido-methyl-propane sulfonate, vinyl alcohol, acrylamide, vinyl methyl ether, isobutylene, a fluoroelastomer, an ester, tetrafluoroethylene, an acetal, propylene, ethylene, methylpentene, methylmethacrylate, fluorinated ethylene propylene, derivatives thereof, and combinations thereof.

Element 2:
the method wherein the sealant composition further comprises a crosslinking agent capable of crosslinking a polymer formed by polymerization of the polymerizable additive.

Element 3:
the method wherein the sealant composition further comprises a crosslinking agent capable of crosslinking a polymer formed by polymerization of the polymerizable additive and wherein the crosslinking agent comprises one selected from the group consisting of a poly(ethylene glycol) diacrylate, a poly(ethylene glycol) dimethacrylate, trimethylolpropane triacrylate (TMPTA), ethoxylated TMPTA, trimethylolpropane trimethacrylate, trimethylolpropanetriacrylate, hexanediol diacrylate, N,N-methylene bisacrylamide, hexanedioldivinylether, triethyleneglycol diacrylate, pentaeritritoltriacrylate, tripropyleneglycol diacrylate, 1,3,5-triallyl-1,3,5-triazine-2,4,6(1H,3H,5H)-trione, 2,4,6-triallyloxy-1,3,5-triazine, alkoxylated bisphenol A diacrylate, derivatives thereof, and combinations thereof.

Element 4:
the method wherein the sealant composition is selected from the group consisting of a resin, a cement composition a settable mud, a lost circulation fluid, a conformance fluid, and combinations thereof.

Element 5:
the method wherein the radiation dose is generated by an electron accelerator.

Element 6:
the method wherein the radiation dose is generated by an electron accelerator located downhole.

Element 7:
the method wherein the electron accelerator generates electrons having an energy of 0.5 MeV to 50 MeV.

Element 8:
the method wherein the radiation dose is from about 5 grays to about 500 grays.

Element 9:
the method wherein subjecting the sealant composition to the radiation dose increases the mechanical strength of the sealant composition.

Element 10:
the method wherein the polymerizable additive is present in an amount of 0.01% to 25% by weight of the cement composition or by weight of the sealant composition.

Element 11:
the method wherein the cement composition further comprises a set retarder.

Element 12:
the method wherein the cement composition further comprises a set retarder and wherein the set retarder is present in an amount of about 0.1% to about 20% by weight of the cement composition.

To facilitate a better understanding of the present invention, the following examples of preferred or representative embodiments are given.

### EXAMPLES

### Example 1:

Cement slurry samples were prepared by mixing the following ingredients: 400 grams of a class H cement (Lafarge, Joppa IL), 160 grams of water (w/c = 0.40), 8.0% by weight of solids (bwos) acrylamide, 0.42%bwos N,N-methylene-bis-acrylamide as a crosslinker, 0.50%bwos maltodextrin as a set retarder, 0.50%bwos HR-25 as a set retarder, 0.20%bwos Diutan gum as a rheology modifier, 0.10%bwos SnCl₂ as an oxygen scavenger, and 1.0%bwos SYLOID^{®} RAD 2105 silica gel (Grace Performance Chemicals, USA).

The slurry was mixed for 45 seconds on a Waring blade mixer as per the API mixing schedule. The slurry was split into two samples. One sample was exposed for 20 seconds to bremsstrahlung radiation produced by focusing an electron beam of 5-6MeV energy onto a tungsten target and placing the sample in a vial at the other end of the tungsten target and thereby exposing the sample to the bremsstrahlung photons. The other sample was not irradiated and kept as a control. The control sample remained fluid. The irradiated sample had been crosslinked and displayed a freestanding solid-like behavior.

### Example 2:

A cement/sand slurry was prepared similar to that of Example 1, except that the 1% SYLOID RAD particles were not included, and 200 grams of the class H cement was replaced with 200 mesh sand for a 50:50 mixture of cement and silica flour.

The slurry was mixed for 45 seconds on a Waring blade mixer as per the API mixing schedule. The slurry was split into two samples. One sample was exposed for 30 seconds to bremsstrahlung radiation produced by focusing an electron beam of 5-6MeV energy onto a tungsten target and placing the sample in a vial at the other end of the tungsten target and thereby exposing the sample to the bremsstrahlung photons. The other sample was not irradiated and kept as a control. The control sample remained fluid. The irradiated sample had been crosslinked and displayed a freestanding solid-like behavior.

### Example 3:

Silica flour slurry samples were prepared by mixing the following ingredients: 400 grams of SSA-1 silica flour (Halliburton, Houston, Texas) 168 grams of water (w/c = 0.42), 0.18wt% Ca(OH)₂ per 100 grams water, 8.0% by weight of solids (bwos) acrylamide, 0.42%bwos N,N-methylene-bis-acrylamide as a crosslinker, 0.20%bwos Diutan gum as a rheology modifier, 0.10%bwos SnCl₂ as an oxygen scavenger.

The slurry was mixed for 45 seconds on a Waring blade mixer as per the API mixing schedule. The slurry was split into two samples. One sample was exposed for 30 seconds to bremsstrahlung radiation produced by focusing an electron beam of 5-6MeV energy onto a tungsten target and placing the sample in a vial at the other end of the tungsten target and thereby exposing the sample to the bremsstrahlung photons. The other sample was not irradiated and kept as a control. The control sample remained fluid. The irradiated sample had been crosslinked and displayed a freestanding solid-like behavior.

The samples demonstrate that bremsstrahlung radiation is utilized to solidify cement by irradiating a sample of polymerizable additive contained in the cement.

## Claims

1. A method comprising:
placing a sealant composition comprising a polymerizable additive into a wellbore penetrating a subterranean formation; and
subjecting the sealant composition to a radiation dose of from 1 gray to 1000 grays, so as to form a seal therein;
wherein the radiation dose is from bremsstrahlung photons that result from electron scattering, and wherein the bremsstrahlung photons initiate setting of the sealant composition.

2. The method of Claim 1, wherein the sealant composition is selected from the group consisting of a resin, a cement composition a settable mud, a lost circulation fluid, a conformance fluid, and combinations thereof.

3. The method of Claim 1, wherein the radiation dose is generated by an electron accelerator.

4. The method of Claim 1, wherein the radiation dose is from 5 grays to 500 grays.

5. The method of Claim 1, wherein subjecting the sealant composition to the radiation dose increases the mechanical strength of the sealant composition.

6. The method of Claim 1, wherein the sealant composition is a cement composition which comprises a hydraulic cement, a polymerizable additive and sufficient water to form a slurry, and the method comprises the step of preparing the composition.

7. The method of Claim 6, wherein the polymerizable additive is present in an amount of 0.01% to 25% by weight of the composition.

8. The method of Claim 6, wherein the composition further comprises a set retarder.

9. The method of Claim 8, wherein the set retarder is present in an amount of 0.1% to 20% by weight of the composition.

10. The method of Claim 1 or Claim 6, wherein the polymerizable additive comprises one selected from the group consisting of acrylate, methacrylate, polyalkylene oxide, alkeneoxide, vinyl pyrrolidone, polyvinyl pyrrolidone, acrylamido-methyl-propane sulfonate, vinyl alcohol, acrylamide, vinyl methyl ether, isobutylene, a fluoroelastomer, an ester, tetrafluoroethylene, an acetal, propylene, ethylene, methylpentene, methylmethacrylate, fluorinated ethylene propylene, and combinations thereof.

11. The method of Claim 1 or Claim 6, wherein the composition further comprises a crosslinking agent capable of crosslinking a polymer formed by polymerization of the polymerizable additive.

12. The method of Claim 11, wherein the crosslinking agent comprises one selected from the group consisting of a poly(ethylene glycol) diacrylate, a poly(ethylene glycol) dimethacrylate, trimethylolpropane triacrylate (TMPTA), ethoxylated TMPTA, trimethylolpropane trimethacrylate, trimethylolpropanetriacrylate, hexanediol diacrylate, N,N-methylene bisacrylamide, hexanedioldivinylether, triethyleneglycol diacrylate, pentaeritritoltriacrylate, tripropyleneglycol diacrylate, 1,3,5-triallyl-1,3,5-triazine-2,4,6(1H,3H,5H)-trione, 2,4,6-triallyloxy-1,3,5-triazine, alkoxylated bisphenol A diacrylate, derivatives thereof, and combinations thereof.

13. The method of Claim 6, wherein the radiation dose is generated by an electron accelerator located downhole.

14. The method of Claim 3 or Claim 13, wherein the electron accelerator generates electrons having an energy of 0.5 MeV to 50 MeV.

## Patentansprüche

1. Verfahren, umfassend:
Platzieren einer Abdichtungsmittelzusammensetzung, umfassend ein polymerisierbares Additiv, in ein Bohrloch, das in eine unterirdische Formation eindringt; und
Aussetzen der Abdichtungsmittelzusammensetzung einer Strahlungsdosis von 1 Gray bis 1.000 Gray, so dass eine Abdichtung darin gebildet wird;
wobei die Strahlungsdosis von Bremsstrahlungsphotonen ausgeht, die aus Elektronenstreuung resultieren, und wobei die Bremsstrahlungsphotonen die Aushärtung der Abdichtungsmittelzusammensetzung initiieren.

2. Verfahren gemäß Anspruch 1, wobei die Abdichtungsmittelzusammensetzung aus der Gruppe, bestehend aus einem Harz, einer Zementzusammensetzung, einem aushärtbaren Schlamm, einem Lost-Circulation-Fluid, einem Konformitätsfluid und Kombinationen davon, ausgewählt ist.

3. Verfahren gemäß Anspruch 1, wobei die Strahlendosis durch einen Elektronenbeschleuniger erzeugt wird.

4. Verfahren gemäß Anspruch 1, wobei die Strahlendosis 5 Gray bis 500 Gray beträgt.

5. Verfahren gemäß Anspruch 1, wobei das Aussetzen der Abdichtungsmittelzusammensetzung der Strahlendosis die mechanische Festigkeit der Abdichtungsmittelzusammensetzung erhöht.

6. Verfahren gemäß Anspruch 1, wobei die Abdichtungsmittelzusammensetzung eine Zementzusammensetzung ist, die einen hydraulischen Zement, ein polymerisierbares Additiv und ausreichend Wasser zur Bildung einer Aufschlämmung umfasst, und das Verfahren den Schritt der Herstellung der Zusammensetzung umfasst.

7. Verfahren gemäß Anspruch 6, wobei das polymerisierbare Additiv in einer Menge von 0,01% bis 25 Gew.% der Zusammensetzung vorhanden ist.

8. Verfahren gemäß Anspruch 6, wobei die Zusammensetzung ferner einen Härtungsverzögerer umfasst.

9. Verfahren gemäß Anspruch 8, wobei der Härtungsverzögerer in einer Menge von 0,1% bis 20 Gew.% der Zusammensetzung vorhanden ist.

10. Verfahren gemäß Anspruch 1 oder Anspruch 6, wobei das polymerisierbare Additiv eines, ausgewählt aus der Gruppe, bestehend aus Acrylat, Methacrylat, Polyalkylenoxid, Alkenoxid, Vinylpyrrolidon, Polyvinylpyrrolidon, Acrylamido-Methyl-Propansulfonat, Vinylalkohol, Acrylamid, Vinylmethylether, Isobutylen, einem Fluorelastomer, einem Ester, Tetrafluorethylen, einem Acetal, Propylen, Ethylen, Methylpenten, Methylmethacrylat, fluoriertem Ethylenpropylen und Kombinationen davon, umfasst.

11. Verfahren gemäß Anspruch 1 oder Anspruch 6, wobei die Zusammensetzung ferner ein Vernetzungsmittel umfasst, das geeignet ist, ein durch Polymerisation des polymerisierbaren Additivs gebildetes Polymer zu vernetzen.

12. Verfahren gemäß Anspruch 11, wobei das Vernetzungsmittel eines, ausgewählt aus der Gruppe, bestehend aus einem Poly(ethylenglykol)diacrylat, einem Poly(ethylenglykol)dimethacrylat, Trimethylolpropantriacrylat (TMPTA), ethoxyliertem TMPTA, Trimethylolpropantrimethacrylat, Trimethylolpropantriacrylat, Hexandioldiacrylat, N,N-Methylenbisacrylamid, Hexandioldivinylether, Triethylenglykoldiacrylat, 1,3,5-Triallyl-1,3,5-triazin-2,4,6(1H,3H,5H)-trion, 2,4,6-Triallyloxy=1,3,5-triazin, alkoxyliertem Bisphenol A-Diacrylat, Derivate davon und Kombinationen davon, umfasst.

13. Verfahren gemäß Anspruch 6, wobei die Strahlendosis durch einen Elektronenbeschleuniger erzeugt wird, der sich im Bohrloch befindet.

14. Verfahren gemäß Anspruch 3 oder Anspruch 13, wobei der Elektronenbeschleuniger Elektronen mit einer Energie von 0,5 MeV bis 50 MeV erzeugt.

## Revendications

1. Procédé comprenant :
la mise en place d'une composition de produit d'étanchéité comprenant un additif polymérisable dans un puits de forage pénétrant dans une formation souterraine ; et
le fait de soumettre la composition de produit d'étanchéité à une dose de rayonnement d'1 gray à 1 000 grays, de façon à former un joint d'étanchéité à l'intérieur ;
dans lequel la dose de rayonnement provient de photons de bremsstrahlung qui résultent d'une diffusion d'électrons, et dans lequel les photons de bremsstrahlung déclenchent le durcissement de la composition de produit d'étanchéité.

2. Procédé selon la revendication 1, dans lequel la composition de produit d'étanchéité est choisie dans le groupe constitué d'une résine, d'une composition de ciment, d'une boue durcissable, d'un fluide de circulation perdu, d'un fluide de conformité, et de leurs combinaisons.

3. Procédé selon la revendication 1, dans lequel la dose de rayonnement est générée par un accélérateur d'électrons.

4. Procédé selon la revendication 1, dans lequel la dose de rayonnement est de 5 grays à 500 grays.

5. Procédé selon la revendication 1, dans lequel le fait de soumettre la composition de produit d'étanchéité à la dose de rayonnement augmente la résistance mécanique de la composition de produit d'étanchéité.

6. Procédé selon la revendication 1, dans lequel la composition de produit d'étanchéité est une composition de ciment qui comprend un ciment hydraulique, un additif polymérisable et suffisamment d'eau pour former une bouillie, et le procédé comprend l'étape de préparation de la composition.

7. Procédé selon la revendication 6, dans lequel l'additif polymérisable est présent dans une quantité de 0,01 % à 25 % en poids de la composition.

8. Procédé selon la revendication 6, dans lequel la composition comprend en outre un retardateur de durcissement.

9. Procédé selon la revendication 8, dans lequel le retardateur de durcissement est présent dans une quantité de 0,1 % à 20 % en poids de la composition.

10. Procédé selon la revendication 1 ou la revendication 6, dans lequel l'additif polymérisable comprend un élément choisi dans le groupe constitué de l'acrylate, du méthacrylate, du polyoxyde d'alkylène, de l'oxyde d'alcène, de la vinylpyrrolidone, de la polyvinylpyrrolidone, de l'acrylamido-méthyl-propane sulfonate, de l'alcool vinylique, de l'acrylamide, du vinyl méthyl éther, de l'isobutylène, d'un fluoroélastomère, d'un ester, du tétrafluoroéthylène, d'un acétal, du propylène, de l'éthylène, du méthylpentène, du méthacrylate de méthyle, de l'éthylène propylène fluoré, et de leurs combinaisons.

11. Procédé selon la revendication 1 ou la revendication 6, dans lequel la composition comprend en outre un agent de réticulation capable de réticuler un polymère formé par polymérisation de l'additif polymérisable.

12. Procédé selon la revendication 11, dans lequel l'agent de réticulation comprend un élément choisi dans le groupe constitué d'un poly(diacrylate d'éthylène glycol), d'un poly(diméthacrylate d'éthylène glycol), du triacrylate de triméthylolpropane (TMPTA), du TMPTA éthoxylé, du triméthacrylate de triméthylolpropane, du triacrylate de triméthylolopropane, du diacrylate d'hexanediol, du N,N-méthylène bisacrylamide, de l'hexanedioldivinyléther, du diacrylate de triéthylèneglycol, du triacrylate de pentaéritritol, du triacrylate de pentaéritritol, du diacrylate de tripropylèneglycol, de la 1,3,5-triallyl-1,3,5-triazine-2,4,6(1H, 3H, 5H)-trione, de la 2,4,6-triallyloxy-1,3,5-triazine, du diacrylate de bisphénol A alcoxylé, de leurs dérivés, et de leurs combinaisons.

13. Procédé selon la revendication 6, dans lequel la dose de rayonnement est générée par un accélérateur d'électrons situé en fond de trou.

14. Procédé selon la revendication 3 ou la revendication 13, dans lequel l'accélérateur d'électrons génère des électrons ayant une énergie de 0,5 MeV à 50 MeV.
